Europäisches Patentamt

European Patent Office

Office européen des brevets

(11) Veröffentlichungsnummer: **0 276 482**
**A2**

## (12) EUROPÄISCHE PATENTANMELDUNG

(21) Anmeldenummer: **87119294.4**

(22) Anmeldetag: **29.12.87**

(51) Int. Cl.4: **C08L 75/04 , C08L 25/02 ,**
**D06M 15/19 , C14C 11/00**

(30) Priorität: **10.01.87 DE 3700571**

(43) Veröffentlichungstag der Anmeldung:
**03.08.88 Patentblatt 88/31**

(84) Benannte Vertragsstaaten:
**AT BE CH DE ES FR GB IT LI NL**

(71) Anmelder: **BAYER AG**

**D-5090 Leverkusen 1, Bayerwerk(DE)**

(72) Erfinder: **Henning, Wolfgang, Dr.**
**Zur Linde 27**
**D-5067 Kürten(DE)**
Erfinder: **Wenzel, Wolfgang, Dr.**
**Peter-Landwehr-Strasse 13**
**D-5060 Bergisch Gladbach 2(DE)**
Erfinder: **Mertens, Günter**
**Beringstrasse 2**
**D-5090 Leverkusen 3(DE)**
Erfinder: **Zabrocki, Karl, Dr.**
**Edelfalter 33**
**D-4044 Büttgen(DE)**

(54) **Mischungen aus wässrigen Polymerdispersionen und deren Verwendung als Beschichtungsmasse.**

(57) Mischungen aus wäßrigen Polymerdispersionen bestehend aus wenigstens einer wäßrigen, unter 70°C filmbildenden Dispersion eines Polymeren mit hydrophilen Gruppen und wenigstens einer wäßrigen, unter 70°C nicht filmbildenden Dispersion eines Polymeren mit einem Schmelzpunkt >70°C und deren Verwendung als Beschichtungsmaterial für textile Substrate oder Leder.

EP 0 276 482 A2

## Mischungen aus wäßrigen Polymerdispersionen und deren Verwendung als Beschichtungsmasse

Die vorliegende Erfindung betrifft Mischungen aus wäßrigen Polymerdispersionen, bestehend aus mindestens einer wäßrigen, unterhalb von 70°C filmbildenden Dispersion eines Polymeren mit hydrophilen Gruppen, vorzugsweise von Polyurethanen mit hydrophilen Gruppen, und mindestens einer wäßrigen, unterhalb von 70°C nicht filmbildenden Dispersion eines Polymeren mit einem Schmelzpunkt >70°C, und deren Einsatz als Beschichtungsmassen, insbesondere für flexible Substrate, wie textile Substrate oder Leder.

Es ist bereits bekannt, wäßrige, filmbildende Dispersionen auf Basis von Polymeren mit hydrophilen Gruppen, vorzugsweise anionischen oder kationischen, hydrophilen Gruppen, zur Herstellung von Beschichtungen auf Substraten, insbesondere textilen Substraten oder Leder, zu verwenden. Dabei haben filmbildende, wäßrige Dispersionen von Polyurethanen eine besondere Bedeutung erlangt. Um diese Polyurethandispersionen auf die verschiedenen Einsatzgebiete und Anforderungen anzupassen, hat man bereits versucht, sie mit weiteren filmbildenden, wäßrigen Dispersionen wie z.B. wäßrigen Dispersionen aus Polyvinylacetat, Polyethylen, Polybutadien, Polyvinylchlorid, Polyacrylat und/oder entsprechenden Copolymerisaten abzumischen. Trotzdem gelang es nicht, für alle Anwendungsgebiete das geforderte hohe Niveau einiger Eigenschaften wie z.B. Naßreibechtheit, Bügelbarkeit oder vollen Griff zu erzielen.

Dies gelingt überraschenderweise durch Abmischen von wäßrigen Dispersionen von Polymeren mit hydrophilen Gruppen (anionischen, kationischen oder nicht ionischen hydrophilen Gruppen), vorzugsweise von Polyurethanen mit den genannten Gruppen, mit wäßrigen, unter 70°C nicht filmbildenden Dispersionen von Polymeren mit einem Schmelzpunkt >70°C und vorzugsweise keinen eingebauten hydrophilen Gruppen.

Gegenstand der vorliegenden Erfindung sind daher Mischungen aus wäßrigen Polymerdispersionen, insbesondere für Beschichtungsmassen bestehend aus

A) mindestens einer wäßrigen 5 bis 70 gew.-%igen, unterhalb von 70°C filmbildenden Dispersion eines Polymeren mit hydrophilen Gruppen, vorzugsweise von Polyurethanen mit hydrophilen Gruppen, und

B) mindestens einer wäßrigen, 5 bis 70 gew.-%igen unterhalb von 70°C nicht filmbildenden Dispersion eines Polymeren mit einem Schmelzpunkt >70°C und vorzugsweise keinen eingebauten hydrophilen Gruppen, wobei das Festoffmengenverhältnis von A):B) im Bereich von 97:3 bis 50:50 liegt.

Beschichtungen auf Basis dieser Mischungen zeigen völlig unerwartet einen verbesserten Glanz, obwohl nicht filmbildende Dispersionen, d.h. zu Pulver auftrocknende Substanzen üblicherweise mattierte Beshichtungen ergeben; außerdem weisen die beschichteten Substrate trotz der heterogenen Einlagerung in den Filmen aus den Polymeren A) eine verbesserte Naßreibechtheit, verbesserte Bügelbarkeit und einen angenehmeren, d.h. volleren Griff, auf. Dies gilt insbesondere für flexible beschichtete Substrate wie Leder.

Ein weiterer Gegenstand der vorliegenden Erfindung sind daher auch Beschichtungsmassen, insbesondere für textile Substrate oder Leder, enthaltend die erfindungsgemäßen Mischungen von wäßrigen Dispersionen, vorzugsweise in Mengen von 20 bis 100 Gew.-%, besonders bevorzugt 30 bis 80 Gew.-%.

Für die erfindungsgemäßen Mischungen können als Dispersionen beliebige wäßrige, filmbildende Dispersionen eingesetzt werden, unabhängig davon, ob es sich bei den Polymeren um anionisch oder kationisch hydrophil modifizierte Polymere handelt. Gegebenenfalls können die den Dispersionen zugrunde liegenden Polymeren nichtionische hydrophile Gruppen enthalten oder ausschließlich mit diesen hydrophiliert sein. Bevorzugt werden als unter 70°C filmbildende Dispersionen Polyurethandispersionen eingesetzt. Die Herstellung solcher Polyurethandispersionen ist bekannt und kann gemäß GB-PS 1 076 688, DT-PS 1 184 946, DT-AS 1 495 745, DT-OS 1 495 847, DT-OS 2 035 732, DT-OS 2 344 135, DT-OS 2 446 440, US-PS 3 479 310, US-PS 3 756 992, US-PS 3 905 929, "Die angewandte Makromolekulare Chemie" 26, 1972, Seiten 85-106 oder "Angewandte Chemie", 82, 1970, Seiten 53-63 erfolgen.

Als unter 70°C filmbildende wäßrige Dispersionen können auch Dispersionen auf Basis von z.B. natürlichem oder synthetischem Kautschuk, Polybutadien, Poly-2-chlorbutadien, Polyethylen, chlorsulfoniertem Polyethylen, gegebenenfalls partiell verseiften Ethylen-Vinylacetat-Copolymerisaten oder Polyacrylnitril eingesetzt werden.

Vorzugsweise werden Polyurethandispersionen in Mischung mit weiteren unter 70°C filmbildenden Dispersionen eingesetzt.

Als Ausgangsverbindungen zur Herstellung der Polyurethane werden die in der Polyurethanchemie an sich bekannten Isocyanatkomponenten, höher molekulare Polyhydroxylverbindungen, insbesondere Polyhydroxypoly-ester, -carbonate oder -ether, vorzugsweise mit einem Molekulargewicht von 400 bis 10.000, Kettenverlängerungsmittel mit mindestens zwei gegenüber Isocyanatgruppen reaktions fähigen Wasserstoffatomen mit vorzugsweise einem Molekulargewicht von 18 bis 399, ionische Verbindungen, die neben mindestens einer gegenüber Isocyanatgruppen reaktionsfähigen Gruppe mindestens eine tertiäre oder quarternäre Ammoniumgruppe, eine Carboxylat-oder Sulfonatgruppe oder eine in derartige Gruppen überführbare Gruppe aufweisen und nicht-ionische hydrophile Verbindungen, die neben mindestens einer gegenüber Isocyanatgruppen reaktionsfähigen Gruppe innerhalb einer Polyetherkette endständig und/oder seitenständig angeordnete Ethylenoxideinheiten aufweisen.

Die Ausgangsverbindungen sind im einzelnen in der oben genannten Literatur beschrieben./

Außerdem werden zur Herstellung der Dispersionen Hilfs-und Zusatzstoffe wie beispielsweise Lösungsmittel, Neutralisationsmittel, Katalysatoren sowie chemisch nicht fixierte Emulgatoren verwendet.

Der Gehalt an ionischen und gegebenenfalls nicht-ionisch hydrophilen Ausgangsverbindungen wird in der Regel so gewählt, daß die Polyurethandispersionen einen Gehalt an ionischen Gruppen, insbesondere an quarternären Ammoniumgruppen, -COO-oder -SO$_3$-Gruppen von 2 bis 200, bevorzugt 2 bis 100 Milliäquivalenten pro 100 g Polyurethan und einen Gehalt an Ethylenoxideinheiten von 0 bis 25 Gew.-%, bevorzugt 0 bis 15 Gew.-%, bezogen auf Polyurethan, aufweisen.

Im allgemeinen erfolgt die Herstellung der Polyurethandispersionen A) nach einem der folgenden, an sich bekannten Verfahren:

1. Das sogenannte "Acetonverfahren" gemäß der Lehre der DE-OS 1 495 745, US-P 3 479 310, wonach ein NCO-endständiges Prepolymer in der Schmelze hergestellt, in einem geeigneten Lösungsmittel gelöst und in Lösung mit einem Kettenverlängerungsmittel zu einem Polyurethan umgesetzt wird. Nachdem die Lösung des Polyurethan-Dispersion durch Abdestillieren des Lösungsmittels erhalten. Mit diesem Verfahren lassen sich im wesentlichen nur lineare Polyurethane aufbauen, da vernetzte Systeme leicht in der organischen Phase gelieren.

2. Ein Verfahren zur Herstellung von Dispersionen auf Polyurethanbasis unter Verwendung blockierter Amine oder Hydrazine als Kettenverlängerungsmittel wird in der DE-OS 2 725 589, US-P 4 269 748, US-P 4 192 937 oder US-P 4 292 226 beschrieben. Hierbei wird ein hydrophiles, endständiges NCO-Gruppen aufweisendes Prepolymer mit zumindest teilweise blockierten Aminen oder Hydrazinen in Abwesenheit von Wasser gemischt und dieses Gemisch anschließend mit Wasser versetzt, wodurch das vorher blockierte Amin oder Hydrazin freigesetzt wird und als Kettenverlängerer des Prepolymeren reagiert. Nach diesem Verfahren können zwar zur Bildung der NCO-endständigen Prepolymere auch aromatische Diisocyanate eingesetzt werden, jedoch sind Prepolymere mit aliphatisch und/oder cycloaliphatisch gebundenen NCO-Gruppen bevorzugt.

3. Bei dem sogenannten "Schmelzdispergier-Verfahren" gemäß DE-OS 1 770 068, US-P 3 756 992, DE-OS 2 637 690 werden die endständigen NCO-Gruppen des hydrophilen Prepolymer mit Harnstoff, Ammoniak oder anderen geeigneten Verbindungen in acylierte Amine umgewandelt und diese vor, während oder nach der Zugabe von Wasser durch Reaktion mit Formaldehyd oder entsprechend reagierenden Verbindungen in Methylol-Gruppen übergeführt. Die Methylolgruppen werden beim Ausheizen unter Abspaltung von Wasser und Bildung des Polyurethans auskondensiert. Dieser Prozeß kann mit allen Polyisocyanaten einschließlich aromatischen Polyisocyanaten durchgeführt werden.

4. Es ist auch eine Verfahrensweise unter Kettenverlängerung der NCO-endständigen Prepolymere im wäßrigen Medium durch Dispergieren der hydrophilen Prepolymere in Wasser und anschließender Zugabe des Kettenverlängerers bekannt. Zur Dispersionsbildung kann sowohl das Wasser zum Prepolymer als auch das Prepolymer zum Wasser gegeben werden. Bei der Kettenverlängerung in wäßrigem Medium sind Prepolymere mit aliphatischen und/oder cycloaliphatischen endständigen NCO-Gruppen besonders bevorzugt. Bei Verwendung von aromatisch gebundenen NCO-Endgruppen ist eine Verkappung dieser Isocyanatgruppe vor der Zugabe von Wasser bevorzugt, wie sie in der US-P 4 387 181 beschrieben wird.

Erfindungsgemäß kann die Dispergierung der Polyurethane grundsätzlich nach beliebigen Verfahren erfolgen. Hierzu zählt beispielsweise die Dispergierung ohne Verwendung von Lösungsmitteln, z.B. durch Vermischung der Polyurethanschmelzen mit Wasser in Geräten, die hohe Schergefälle erzeugen können, sowie die Verwendung von sehr geringen Mengen Lösungsmittel zur Plastifizierung bei der Verarbeitung in den genannten Geräten sowie auch der Einsatz von nicht-mechanischer Dispergiermittel, wie Schwellen extrem hoher Frequenz. Es können jedoch auch einfache Mischer, z.B. Rührkessel oder sogenannte Rücklaufmischer Verwendung finden, wenn die Polyurethane selbst dispergierbar sind.

Die erfindungsgemäß bevorzugt zum Einsatz kommenden wäßrigen Polyurethandispersionen sollten einen Feststoffgehalt von 5 bis 70 Gew.-% und eine Teilchengröße von 0,02 bis 0,8 μm aufweisen.

Die nicht filmbildenden Kunststoffdispersionen B) sind aus dem Stand der Technik bekannt und werden nach bekannten Methoden der Emulsionspolymerisation hergestellt. Dabei werden als wäßrige, unterhalb 70°C nicht filmbildende Dispersion Dispersionen von Polymeren mit einem Erweichungspunkt oberhalb 70°C, vorzugsweise von (Co)polymerisaten von α,β ungesättigten Monomeren und/oder Dienen wie sie beispielsweise in der US-PS 3 939 013, der DT-OS 2 014 385 und DT-OS 1 935 345, DT-OS 1 935 348 oder DT-OS 1 935 349 beschrieben sind. Grundsätzlich können beliebige, die genannten Eigenschaften aufweisende Polymerdispersionen eingesetzt werden, wie beispielsweise solche auf Basis von Styrol-Butadien-Copolymeren, Styrol-Acrylnitril-Copolymeren, Poly-α-methylstyrol, Polystyrol, Polybutadien-Acrylnitril-Copolymeren, Butadien-Methacrylat-Copolymeren, Polyacrylsäureestern.

Bevorzugt werden als Monomere Butadien und Vinylgruppen enthaltende Verbindungen vorzugsweise aromatische, eingesetzt. Besonders bevorzugt sind Polymere aus Acrylnitril und Styrol, wie sie beispielsweise in US-P 4 009 226, DE-OS 3 304 544 oder DE-OS 3 006 804 beschrieben sind. Dabei sollten bei Styrol und/oder α-Methylstyrolcopolymeren, der Anteil an Styrol bzw. α-Methylstyrol mindestens 60 Gew.-%, vorzugsweise 60 bis 75 Gew.-% betragen.

Vorzugsweise können auch Mischungen aus Polymerdispersionen der Art B) und/oder Mischungen von Dispersion der Art A) eingesetzt.

Der Feststoffgehalt der Polymerdispersionen B) sollte im Bereich von 5 und 70 Gew.-%, bevorzugt von 10 und 60 Gew.-% liegen. Erfindungsgemäß sind nur solche Polymerdispersionen als Dispersionen B) geeignet, die unterhalb von 70°C nicht filmbildend auftrocknen und das zugrunde liegende Polymer einen Erweichungs-bzw. Schmelzpunkt von über 70°C aufweist.

Die Polymerdispersionen A) werden mit den Polymerdispersionen B), vorzugsweise in einem Verhältnis von 97:3 bis 50:50, bevorzugt 97:3 bis 70:30, bezogen auf Feststoffgehalt, gemischt.

Die Mischung der Dispersionen kann so erfolgen, daß die bereits fertiggestellten Dispersionen A) und B) in den gewünschten Verhältnissen unter Rühren zusammengegeben werden. Erfindungsgemäß ist es aber auch möglich, beispielsweise bei Verwendung von Polyurethandispersionen als Dispersion A), die Dispersion B) bereits während der Herstellung der Dispersion A) zuzugeben, indem man beispielsweise die Komponente B) bereits dem zur Dispergierung des Polymeren B) verwendeten Wasser zufügt. Werden die erfindungsgemäßen Mischungken als Beschichtungsmassen verwendet, so können selbstverständlich auch die in der Beschichtungstechnik an sich bekannten Hilfs-und Zusatzstoffe beigefügt werden, wie beispielsweise griffverbessernde Mittel, Pigmente, Verlaufmittel, Verdickungsmittel, Stabilisatoren und Inhibitoren.

Beschichtungsmassen auf Basis der erfindungsgemäßen Mischungen eingen sich zur Beschichtung beliebiger Substrate, bevorzugt jedoch zur Beschichtung flexibler Substrate, besonders bevorzugt zur Beschichtung textiler Substrate, oder Leder.

Die erfindungsgemäßen Beschichtungsmassen können nach bekannten Beschichtungstechniken verarbeitet werden. Als Applizierungstechniken seien beispielhaft genannt: Rakeln, Spritzen, Gießen, Plüschen, Drucken u.a. Nach dem Applizieren werden die Beschichtungen getrocknet, bevorzugt entweder in einem Trockner oder, bei kontinuierlicher Arbeitsweise, in einem Trockenkanal.

Die erfindungsgemäßen Beschichtungsmischungen können sowohl als Grundierung bzw. Haftstrich als auch als Appretur bzw. Deckstrick verwandt werden.

In den folgenden Beispielen, wenn nicht anders vermerkt, sind die Mengenangaben als Gewichtsteile bzw. Gewichtsprozente zu verstehen.

### Beispiel 1

Zurichtflotte für die Spaltledergrundierung bestehend aus
150 Tl Weiß-Pigment auf $TiO_2$-Basis
130 Tl Wasser
60 Tl Griffmittel auf Basis tierischer und synthetischer Fette
160 Tl einer Polyurethandispersion (Dispersion A)), hergestellt nach der DP 1 495 745 aus einem Polyesterdiol, Butandiol, einem Isocyanat und einem Diamin, das Sulfonatgruppen enthält. Der Feststoff der Dispersion beträgt 40%, die Viskosität 15 sec Auslaufzeit (4 mm Düse, DIN 53211).
320 Tl einer 40 %igen wäßrigen Dispersion auf Polybutadien-Basis (Dispersion A))
100 Tl einer Polymerisatdispersion B) auf Basis eines Copolymerisats aus α-Methylstyrol und Acrylnitril mit einem Feststoff von 35 % und einer mittleren Teilchengröße von 79 μm. Das mittlere Molekulargewicht beträgt ca. 100.000.
20 Tl Vernetzer auf Epoxid-Basis
20 Tl Wasser
50 Tl Wachsdispersion auf Basis Polyethylen.

Die Zurichtflotte wird mittels einer Spritzpistole auf das Leder aufgetragen. Zum Vergleich wurde eine identische Flotte ohne die Dispersion B) auf das Leder aufgespritzt.

Die erfindungsgemäß zugerichteten Leder zeigen eine bessere Fülle, verbesserte Bügelbarkeit (weniger Kleben an der Bügelplatte) und einen trockeneren Griff als Leder mit einer Zurichtflotte ohne Dispersion B). Die Lichtechtheit der Zurichtung ist unverändert. Als weiterer Vorteil erweist sich eine Viskositätssteigerung der Flotte ohne die üblichen Nachteile von viskositätserhöhenden Produkten wie erhöhte Hydrophilie der Zurichtung.

Beispiel 2

Folgende Mischung wurde als Ledergrundierung für vollnarbiges Leder verwendet:
100 Tl anorganisches Pigment
50 Tl Griffmittel auf Basis tierischer und synthetischer Fette
100 Tl einer wäßrigen Dispersion B) auf Basis Styrol (72 Gew.-%)/Acrylnitrilcopolymerisaten mit einem Feststoffgehalt von 35 %. Das mittlere Molekulargewicht beträgt ca. 100.000, die mittlere Teilchengröße 125 μm.
450 Tl Wasser
100 Tl der bei Raumtemperatur filmbildende Polyurethandispersion nach Beispiel 1
100 Tl einer 40 %igen wäßrigen Dispersion auf Butadien-Basis
100 Tl einer 40 %igen wäßrigen Dispersion auf Basis Polybutylacrylat (Dispersion A))

Die Ledergrundierung wurde gemäß Beispiel 1 durchgeführt.

Im Vergleich zu einer Ledergrundierung ohne die Dispersion B) zeigen die erfindungsgemäß zugerichteten Leder eine verbesserte Fülle, einen trockeneren Griff, bessere Bügelbarkeit und vor allem verbesserte Naßreibechtheit der Leder.

Beispiel 3

Folgende Mischung wurde als Appretur für Leder verwendet:
300 Tl einer wäßrigen Polyurethandispersion hergestellt nach DP 1 495 745 aus einem Polyesterdiol, aus 2-und 3-wertigen kurzkettigen Alkoholen, von denen eines eine hydrophile Gruppe enthält, aus einem Isocyanat und aus einem Amin. Der Feststoff der Dispersion beträgt 30 %, die Viskosität 30 sec. Auslaufzeit (4 mm Düse, DIN 53211), die Teilchengröße ca. 0,070 μm (Dispersion A))
75 Tl einer wäßrigen Polymerisatdispersion B) auf Basis Styrol/Acrylnitrilcopolymerisat mit einem Feststoffgehalt von 35 % und einer mittleren Teilchengröße von 128 μm. Das mittlere Molekulargewicht beträgt ca. 250.000,
oder
75 Tl der wäßrigen Polymerisatdispersion B) nach Beispiel 2
625 Tl Wasser.

Das Applizierungsverfahren entspricht dem in Beispiel 1.

Im Vergleich zu einer identischen Zurichtung ohne eine Dispersion B) zeigen die erfindungsgemäß appretierten Leder einen erhöhten Glanz und verbesserte Naßreibungen. Letzteres macht sich besonders bemerkbar bei Verwendung der Polymerdispersion B) nach Beispiel 2.

**Ansprüche**

1. Mischungen aus wäßrigen Polymerdispersionen, bestehend aus

A) mindestens einer wäßrigen 5 bis 70 gew.-%igen, unterhalb von 70°C filmbildenden Dispersion eines Polymeren mit hydrophilen Gruppen, und

B) mindestens einer wäßrigen, 5 bis 70 gew.-%iogen unterhalb von 70°C nicht filmbildenden Dispersion eines Polymeren mit einem Schmelzpunkt >70°C

wobei das Feststoffmengenverhältnis von A):B) im Bereich von 97:3 bis 50:50 liegt.

2. Mischungen nach Anspruch 1, dadurch gekennzeichnet, daß als Dispersion A) eine wäßrige Dispersion eines Polyurethans mit hydrophilen Gruppen und als Dispersion B) eine wäßrige Dispersion eines Styrol-oder α-Methylstyrol-(co)polymeren eingesetzt wird.

3. Beschichtungsmassen, insbesondere für textile Substrate oder Leder, enthaltend die Mischungen von wäßrigen Dispersionen nach Anspruch 1 oder 2.